(19) Europäisches Patentamt
European Patent Office
Office européen des brevets

(11) Publication number: 0 379 746 B1

# (12) EUROPEAN PATENT SPECIFICATION

(45) Date of publication of patent specification: **28.09.94**

(51) Int. Cl.[5]: **C09D 7/12**, C09D 167/06

(21) Application number: **89203055.2**

(22) Date of filing: **30.11.89**

## (54) Coating composition containing tetrapod-like zinc oxide whiskers.

(30) Priority: **30.11.88 JP 304754/88**
**30.11.88 JP 304755/88**
**30.11.88 JP 304756/88**
**30.11.88 JP 304757/88**
**30.11.88 JP 304758/88**

(43) Date of publication of application:
**01.08.90 Bulletin 90/31**

(45) Publication of the grant of the patent:
**28.09.94 Bulletin 94/39**

(84) Designated Contracting States:
**DE FR GB IT NL SE**

(56) References cited:
**EP-A- 0 374 855**

**DATABASE WPIL, accession no. 89-305006 [42], Derwent Publications Ltd, London,GB; & JP-A- 1 225 663 (MATSUSHITA ELECTRIC) 08-09-1989**

(73) Proprietor: **NIPPON PAINT CO., LTD.**
**1-2, Oyodokita 2-chome**
**Kita-ku**
**Osaka-shi Osaka 572 (JP)**

Proprietor: **MATSUSHITA ELECTRIC INDUSTRIAL CO., LTD.**
**1006, Oaza Kadoma**
**Kadoma-shi, Osaka-fu, 571 (JP)**

(72) Inventor: **Konishi, Sakuichi**
**1335-14, Komyo-cho**
**Ikoma-shi Naraken (JP)**
Inventor: **Takeuchi, Kunihiko**
**4-1-4, Hyakurakusou**
**Minoo-shi Osaka-fu (JP)**
Inventor: **Umeda, Shinichiro**
**7-2, Higashiura-cho**
**Ichijoji Sakyo-ku**
**Kyoto-shi Kyoto-fu (JP)**
Inventor: **Kuwajima, Teruaki**
**6-9-1-403, Hishiyanishi**
**Higashiosaka-shi Osaka-fu (JP)**
Inventor: **Okuda, Yoshitaka**
**23-14, Nagisaminamimachi**
**Hirakata-shi Osaka-fu (JP)**
Inventor: **Hamada, Takeshi**
**610-26, Namaze**
**Shiose-cho**
**Nishinomiya-shi Hyogo-ken (JP)**
Inventor: **Matsuo, Kouziro**
**92-2, Yatayama-cho**
**Yamatokoriyama-shi Nara-ken (JP)**

EP 0 379 746 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Inventor: **Yoshinaka, Minoru**
**1471, Inada**
**Higashiosaka-shi Osaka-fu (JP)**
Inventor: **Oku, Mitsumasa**
**2-3, Higashitokiwadai 6-chome**
**Toyono-cho**
**Toyono-gun Osaka-fu (JP)**

(74) Representative: **Smulders, Theodorus A.H.J., Ir.**
**Vereenigde Octrooibureaux**
**Nieuwe Parklaan 97**
**NL-2587 BN 's-Gravenhage (NL)**

## Description

Field of the invention

The present invention relates to a coating composition containing tetrapod-like zinc oxide whiskers, which is specifically useful as a curing type coating composition in the form of aqueous type, solvent type or powder paint capable of resulting a coating with excellent chipping resistance, abrasive resistance and the like, and being useful as a top coat or intermediate coat, a road marker or an abrasive putty. The invention also concerns a curing acceleration catalyst carried on tetrapod-like zinc oxide whiskers.

Background of the invention

After being applied, coating compositions are usually cured or hardended at an elevated temperature or room temperatures.
Thus formed coatings are required, depending on the intended objects, to be well stand to mechanical and/or chemical forces. For example, in an automobile industries, various characteristic properties are required for coating compositions to be used as a top coat, an intermediate coat, a repairing putty, road marker and the like.
In a cold area, in order to keep a transportation route, a considerable quantity of anti-freezing agent comprising chlorides as sodium chloride, calcium chloride and the like, and crushed stones are generally spreaded over road surfaces in winter season. Therefore, an automobile body is, while driving, liable to be damaged by leaped stones or splashed mud and rusted under the influences of high humidity and salt atmosphere. Thus, in these areas, a top coat composition to be applied onto automobile bodies and coating system must fulfill the requirement of resulting a coating with excellent chipping resistance and corrosion resistance. Usually, automobile bodies are coated with the lamination of phosphating coating, under coating (electrodeposition primer coating), intermediate coating and a top coating and in order to improve chipping resistance, anti-chipping pigments are usually contained in said intermediate coating. For example, in Japanese Patent Publication (unexamined) 13334/76, is disclosed a solvent type intermediate coating composition containing 75 to 10%, in terms of weight % to the total solid weight, of ultrafine selicite; in Japanese Patent Publication (unexamined) 36165/80, a coating composition being excellent in both chipping resistance and corrosion resistance and comprising an acidic resin having a particular acid value added with talc and anti-corrosive pigment; in Japanese Patent Publication (unexamined) 52139/79, an aqueous emulsion coating composition added with finely pulverized vulcanized rubber as anti-chipping agent; and in Japanese Patent Publication (unexamined) 170537/81, an aqueous chipping resistant sealer comprising an aqueous coating composition comprising an aqueous resin and resin microparticles and being excellent in application characteristics, added with an anti-chipping pigment and anti-corrosion pigment.
However, heretofore proposed anti-chipping coating compositions are all based on the use of considerably larger quantity of leaf-like or scale-like inorganic pigments as, for example, talc, selicite, carbon black, barium sulfate and the like having an average diameter of 20µm or less. In these cases, when formed coatings, the leaf-like or scale-like pigments are horizontally oliented in the coatings, exhibiting stress relaxation effect to impacts born from horizontal shrinkage, modulus of elasticity of coating and the like. Nevertheless, with respect to chipping resistance and anti-rust property, the heretofore proposed coating compositions are not fully of satisfaction and further improvements have been strongly desired.
In the coating of outer surface of ship body where a direct contact with pier wall is often occurred and the coating of inner surfaces of tank, hopper and pipe lines for storing and transporting ore, cement, cereal and the like on where severe mechanical and physical abrasion forces are always exerted, have been examined a coating composition which comprises a comparatively soft urethane resin compounded with fibrous fillers as glass fiber and can result a coating having an elastic deformation property, and a coating composition which comprises epoxy/amine based resins and can provide a hard coating. However, in the former, since the main object is to prevent coat-scaling through a shock absorption, the formed coating is indeed excellent in an impact strength, but is deficient in abrasion resistance and durability. Furthermore, since it is very difficult to obtain finely pulverized fibrous fillers, there are problems in application properties especially in time of spraying and in smoothness of the resulted coating. Whereas, in the latter, the object is to improve scratch resistance by increasing an apparent hardness of coating, but there is a problem that since the resulted coating is easily damaged by springing powder or granules, scaling or peeling of the coating is liable to occur in a long-term service of the coated materials. Thus, none of the proposed coating compositions can give fully satisfied protective coatings.
For the preparation of wood or metal surfaces, or the repair of pinholes, cracks, crevices or distortion of

coating or depression of automobile bodies, a pasty putty comprising a mixture of pigment and vehicle selected from oily varnish, synthetic resin, nitrocellulose, synthetic resin emulsion, casein or the like has been widely used. These putties are roughly classified in oil putty (e.g. oil putty, size putty and the like); synthetic resin putty (e.g. vinyl chloride putty, urethane putty, polyester putty, vinyl ester putty, alkyd resin putty and the like); cellulose putty known as lacquer putty; and aqueous putty (e.g. casein putty, emulsion putty and the like). In the actual application, most appropriate type of putty must be selected in due consideration of degree of damages of the substrate, type of substrate, and type of intermediate and top coats and the like. The selected putty should fulfill the conditions that it has a good workability, is excellent in adhesion to both substrate and top coat, and is easily applicable as a filler material and give a smooth surface without causing any slendering in thickness or cracking and is well resistive to a top coat composition.

However, heretofore proposed putties are not enough in certain respects. For example, oil putty, casein putty, emulsion putty and the like take in general a considerable time in drying; and polyester putty and vinyl ester putty each has the problem that curing reaction at putty surface is liable to be hindered through contact with oxygen in air and in extreme case, fully prohibited at the surface area. At that time, there causes the question of inferior adhesion and water resistance of the coating. Usually, after applying putty, the cured coating is subjected to grinding with sand paper and the like. At this step, most of the heretofore proposed putties are liable to generate clogging of abrasive paper, causing extreme lowering in workability.

Today, as a repairing putty for automobile bodies, have been widely used a two-component polyester putty, one component comprising as main ingredients unsaturated polyester resin, filler, unsaturated vinyl monomers, and curing accelerator and the other component comprising a peroxide hardening agent, and a three-component polyester putty comprising the abovementioned two components and the third component comprising a curing accelerator as lead naphthenate and the like. Even in these putties, attempts have been made to improve grinding properties of the formed coatings by incorporating into the putties such fillers as calcium carbonate, clay and the like for the purpose of improving plasticity of the coating, or by coloring hardening agent with a dyestuff so that color change of said dyestuff in a curing reaction of putty can be visually examined, and possible grinding of uncured putties is effectively obviated, as, for example, in Japanese Patent Publication 120612/84 and Japanese Patent Publication (unexamined) 91572/87.

However, these could not be said to give a fully satisfied solution on clogging problem of abrasive paper and further improvements are still required.

In another application of coating compositions, the so-called road-marking paint which is brilliantly colored in white, yellow, red or the like so as to be easily detected by driver or walker, hardly discolored, excellent in weather resistance and durability and applicable in a thicker coating is widely used for indicating road marks as center line, outer line, pedestrian crossing, zebra crossing, stop line and the like, curb marking as no parking sign, and vertical surface causion marks at bridge footing, electric pole, girder bridge rail, concrete wall at curve and the like is wisely used.

Heretofore proposed road marking paints generally comprise a mixture of a vehicle resin, which is comparatively excellent in weather resistance and durability and is well resistive to asphalt exudation and machine oil attack, as, for example, petroleum resin, $C_5$ resin, $C_9$ resin, polyester resin, phthalic resin, alkyd resin, maleic rosin resin, rosin modified alkyd resin, and acrylic resin, inorganic or organic colored pigments as, for example, durable white or yellow inorganic pigments as titanium white, zinc white, barium sulfate, lithopone, lead chromate; and other optional additives as loading pigment as calcium carbonate and the like, plasticizer as liquid alkyd, natural oil, process oil naphthene, dibutyl phthalate and the like, anti-settling agent as silica, wax and the like, bluing agent, surface tack eliminator, dispersing agent, solvent and the like. The may often include reflective material as glass beads having a reflective idex of 1.4 to 2.0 and are used as a reflecting road sign marker.

Such road marking pains are classified and used, depending on their compositions, in either form of room temperature curing type (e.g. solid content 79%), heat hardening type (e.g. solid content 85%) or heat fusion type (solid content 100%).

However, with an ever increasing traffic volume, a more effective road marker is required. Such marker should be much more excellent in visibility and especially in return reflectivity and whiteness in dark and rainy days, less expensive, capable of resulting a coating with far improved durability (abrasion resistance and toughness) and weather resistance and applicable in thicker coating.

In coating compositions and molding materials, various resins are used as main ingredient and they are cured by drying at room temperatures or baking at elevated temperatures. In many cases, these compositions may further include zinc oxide as loading pigment or white pigment, and various curing acceleration catalysts. Examples of such catalysts are organotin compounds as a blocker releasing accelerator for blocked isocyanate in urethane resin composition, various peroxide catalysts in unsaturated

polyester resin composition, various oxidation or polymerization type dryers, various metal soaps in fatty acid modified synthetic resin composition, organic amines as tertiary amines or ammonium salts in epoxy resin composition, organic acids and metal chelate compounds in amino resin composition and the like.
The principal object of using such catalyst is to obviate heterogeneous curing i.e. premature surface dry and deficient inner curing, as far as possible. However, in the actual adding operation of such loading pigment or acceleration catalyst in a coating composition or a molding composition, it is very difficult, even after adopting a vigorous stirring, to get a uniform distribution of such catalyst in the composition. Therefore, there always remains a trouble of ununiform curing of coating or molding product due to maldistribution of such catalyst. A considerably longer curing time is therefore always required.
Thus, there are still remaining various problems in the respective coating compositions used in each different applications.
An object of the invention is to provide a novel class of universal additive to be used in various coating compositions for various applications. An additional object of the invention is to provide an intermediate coating composition for automobile bodies which is specifically excellent in chipping resistance as well as a corrosion resistance.
A further object of the invention is to provide a coating composition which is specifically excellent in abrasion resistance and impact resistance and especially useful in the coating of ship body surface and inner wall coating of tank, hopper, piping and the like to be used in storage and transportation purposes for ore, cereal, cement and other powdery or granular products. It is an additional object of the invention to provide a high quality putty being free from clogging of abrasive paper and capable of resulting an excellent ground surface. It is also an object of the invention to provide a novel road marker being excellent in visuality and especially in return reflectivity and whiteness in dark and rainy days, less expensive, capable of resulting a coating with far improved durability (abrasion resistance and toughness) and weather resistance and applicable in thicker coating. A further object of the invention is to provide a curing acceleration catalyst which is specifically useful in a curing type coating composition.

Summary of the invention

According to the present invention, the aforementioned objects can be attained by providing

1. A coating composition comprising a resinous vehicle and coating additives, which is characterized in that the resinous vehicle is selected from the group consisting of a combination of at least two resins each having either one of mutually active, crosslinkable functional groups, a combination of a resin and a compound each having either one of mutually reactive, crosslinkable functional groups, and at least one resin having in its molecule both of mutually reactive, crosslinkable functinal groups, and the coating composition contains tetrapod-like zinc oxide whiskers each comprising a central nuclear portion from which 4 crystalline needles are outwardly extended each in a different direction, the average diameter of said needle measured at the foot portion thereof being 0.7 to 14 $\mu$m and the average length of said needle being 3 to 200 $\mu$m, the amount of said whiskers being at least 1% by weight of the total solid of the composition.

2. The composition according to claim 1 wherein the coating additives include colored pigments and body pigment, and the amount of said whiskers is 1 to 30% by weight of the total solid of the composition, which can result a coating with excellent chipping resistance.

3. A composition according to claim 2 which is formulated in either one of a water borne paint, a solvent type paint or a powder paint.

4. A composition comprising a resinous vehicle and coating additives, characterized in that the resinous vehicle is selected from the group consisting of a combination of at least two resins or a resin and a compound each having either one of mutually active, crosslinkable functional groups, and at least one resin having in its molecule both of mutually reactive, crosslinkable functional groups, providing resulting a coating with Tg value of 90°C or more, said coating additives include microparticles of natural or artificial hard ceramics, having an average diameter of 0.1 to 200 $\mu$m, selected from the group consisting of bauxite, silica sand, powder emery, alumina, zirconia, silica, magnesite and magnesia, and the composition contains tetrapod-like zinc oxide whiskers as defined in claim 1, the amount of said whiskers being 10 to 70% by weight of the total solid of the composition, the sum of said whiskers and said microparticles being 30 to 80% by weight of the total solid of the composition, which can give a coating with excellent abrasion resistance.

5. A composition comprising a resinous vehicle and coating additives, characterized in that the resinous vehicle is a durable resin selected from the group consisting of petroleum resin, $C_5$ resin, $C_9$ resin, polyester resin, phthalic resin, alkyd resin, maleic rosin resin, rosin modified alkyd resin and acrylic resin,

the coating additives are any combinations of colored pigment, body pigment, plasticizer, anti-settling agent, bluing agent, detackifier, dispersing agent, solvent and glass bead, and the composition contains tetrapod-like zinc oxide whiskers as defined in claim 1, the amount of whiskers being 9 to 95% by weight of the total solid of the composition, which is specifically useful as a road marker.

6. A composition comprising a resinous vehicle and coating additives, characterized in that the resinous vehicle is a combination of unsaturated polyester resin and unsaturated vinyl monomer, the coating additives include hardening accelerator and peroxide hardener, and the composition contains tetrapod-like zinc oxide whiskers as defined in claim 1, the amount of said whiskers being 1 to 30% by weight of the total solid of the composition, which is specifically useful as an abrasive putty.

7. A composition of any one of claims 1 to 6 wherein the whiskers are previously treated with a coupler so as to give hydrophobic property thereto.

8. A curing acceleration catalyst composition, characterized in that the composition is obtained by contacting tetrapod-like zinc oxide whiskers as defined in claim 1, with a solution or dispersion of curing acceleration agent selected from the group consisting of organotin compound, peroxide, organic acid, organic amine, ammonium salt and metal chelate, and drying the thus treated whiskers.

Preferred embodiments of the invention

The inventors have previously found that crystalline zinc oxide whiskers each comprising a central nuclear portion from which certain number of crystalline needles are outwardly extended each in different directions can be obtained in a higher reaction yield by the heat treatment of metallic zinc powder each bearing an oxide surface coating in an oxygen containing atmosphere and filed Japanese Patent Applications on the preparation of such zinc oxide whiskers having the disclosed characteristic features (named by the inventors as tetrapod-like zinc oxide whiskers) as Japanese Patent Application Nos. 334418/87, ibid 41329/88 and ibid 41330/88.

The crystalline needle portion of said tetrapod-like zinc oxide whisker may include 3, 2 or in certain circumstances 1 needle, but mostly consists of 4 needles extending outwardly from the nuclear portion each in different axial direction.

The whiskers having decreased number of needles are believed to have been derived from the original whiskers having 4 needles through breakdown of certain number of the needles thereof. In certain circumstances, a small amount of plate crystal whiskers are included.

However, regardless of the crystalline form, every X-ray diffraction diagrams of such whiskers show only zinc oxide peak and in most whiskers, electron beam diffraction analysis datas show single crystal structure having least transition and lattice defect. The impurity content is very low and zinc oxide purity determined by an atomic absorption analysis is as high as 99.98%. It was thus confirmed that the abovementioned whiskers are composed of highly pure zinc oxide and each has a tetrapod-like whisker structure comprising a central nuclear portion from which 4 crystalline needles are extending outwardly each in different axial direction.

The term "tetrapod-like zinc oxide whiskers" as used herein shall mean the whiskers having the abovementioned structural characteristic features.

The present invention relates to practical applications of such tetrapod-like zinc oxide whiskers to paint area.

The inventors have first found that a coating composition compounded with 1 to 30% be weight of the total solid of such tetrapod-like zinc oxide whiskers can result a coating with excellent chipping resistance and anti-rusting effects as compared with those of heretofore known anti-chipping coating composition and hence is very useful as an intermediate coating in an automobile industries. Furthermore, to our great surprise, the tetrapod-like zinc oxide whiskers are well adapted to any of aqueous medium, oily medium and resinous vehicles for powder coating and therefore, can be added to any of aqueous paint, oily paint and powder coating, resulting coatings with excellent chipping resistance and anti-corrosion properties originated in their unique shapes and properties.

If desired, the whiskers may be previously treated with a coupler as silane coupler, aluminium coupler, titanate coupler and the like so as to give hydrophobic properties thereto, and thus treated whiskers can be advantageously added to oily paint.

In this first invention, as the resinous vehicle, any of the following may be satisfactorily used:

a combination of at least two resins each having either one of mutually reactive, crosslinkable functional groups; a combination of a resin and a compound each having either one of mutually reactive, crosslinkable functional groups; and at least one resin having in its molecule both of mutually reactive, crosslinkable functional groups. Examples of such functional groups are carboxyl group, hydroxyl group, isocyanate

group, epoxy group, amino group, imino group, sulfonic acid group, alkoxy silane group, active methylol group and the like. Any of appropriate combinations of such groups may be advantageously used in this invention.

In the case of oily paint, the present anti-chipping coating composition is prepared by providing a solution or dispersion of such resins as saturated or unsaturated alkyd resin, acryl resin, epoxy resin, polyester resin, urethane resin, poly-alkadiene resin, polyolefin resin, cellulose-acetate-butyrate resin, petroleum resin, styrene resin or combinations of such resins with aminoplast resin, nitrocellulose resin, blocked polyisocyanate or polyisocyanate compounds, in an organic solvent, and adding to thus prepared vehicle tetrapod-like zinc oxide whiskers and other optional additives as color pigment, body pigment, conventional anti-chipping agent (e.g. talc and the like), anti-corrosive pigment (e.g. metal chromate, metal phosphate, metal molybdate, metal tungstate, tannic acid and the like), and other coating additives.

However, in this first aspect of the invention, the amount of said tetrapod-like zinc oxide whiskers should be selected in a range of 1 to 30% by weight of the total solid of the composition. If the amount of said whiskers is less than 1% by weight, there is no substantial effect of the whiskers, but at the level of more than 1% by weight, an excellent chipping resistance can be obtained even without using any conventional anti-chipping agents and when co-used with such anti-chipping agent, there is a sure and marked synergistic anti-chipping effect. The inventors have found that the maximum content of such whiskers should be preferably limited to 30% by weight in this aspect of the invention, and no additional increase in chipping resistance can be expected with the increased whisker amount. At that time, pigment volume concentration will be uselessly increased to a higher level, giving rather undesired effects on film properties. Differing from the conventional zinc oxide powder, the present tetrapod-like zinc oxide whiskers can be stably dispersed in an oily paint and however, previously mentioned pretreated hydrophobic whiskers may be more preferably and advantageously used in this invention.

In the case of aqueous paint, an aqueous emulsion of such resins as alkyd resin, acryl resin, maleic polybutadiene resin, urethane resin, epoxy resin, aminoplast resin, casein, vinyl resin and the like, or an aqueous solution or dispersion of the abovementioned resin bearing such functional groups as acidic group, hydroxyl group, oxirane group, active methylol group, amino group, reactive carbon-carbon unsaturation, isocyanate group, blocked isocyanate group, halogen and other acidic or basic group may be used as vehicle material, to which the present tetrapod-like zinc oxide whiskers and other optional additives as resinous fine particles (for improvement of application characteristics), conventional anti-chipping agent, anti-corrosive pigment and other additives are added to obtain the present anti-chipping coating composition.

At that time, the amount of said tetrapod-like zinc oxide whiskers should preferably be limited in a range of 1 to 30% by weight of the total solid of the composition, too. An aqueous anti-chipping sealer can be obtained by the mere addition of tetrapod-like zinc oxide whiskers in an aqueous resin vehicle, and if desired, anti-corrosive pigment and other anti-chipping pigment are further added thereto.

Examples of such anti-corrosive pigments are metal chromate, metal phosphate, metal molybdate, metal tungstate and tannic acid, and appropriate metals are the members belonging to Groups I, II, III or IV of the Periodic Table as, for example, lithium, potassium, sodium, calcium, strontium, barium, zinc, lead, aluminium and the like. The amount of such anti-corrosive pigment is in general 2 to 50% by weight of the total solid of the composition, but the maximum limit should preferably be determined at the level of causing no adverse effects on storage stability of the coating composition and coating properties and especially water resistance thereof.

Since the desired anti-chipping effect is surely obtained with the present tetrapod-like zinc oxide whiskers, there is no need of using additional anti-chipping pigment. However, when such pigments are used together with the present whiskers for synergistic and economical reasons, such pigments are selected from the known anti-chipping pigments as leaf-like or scale like talc, selicite, carbon black, barium sulfate having an average diameter of 20μm or less and the sum of such pigment and the present tetrapod-like zinc oxide whiskers should preferably be determined in a range not exceeding over the upper limit of 50% by weight of the total solid of the composition. Otherwise, there is a tendency that smoothness and other desired properties of the coating will be undesirably lowered.

In this invention, the anti-chipping coating composition may also be furnished in the form of powder coating. In a conventional powder coating, a binder resin as epoxy resin, vinyl resin, chlorinated polyether resin, polyurethane resin, polyamide resin, polyester resin, cellulose resin and the like is compounded with a hardener, pigment and other additives and the mixture is formulated into powdery particles having an average diameter of 500μm or less. Such powder is applied by a fluidized bed coating system, an electrostatic coating system, a powder atomizing, a flame spray coating or a flock coating system onto a heated substrate. In this invention, tetrapod-like zinc oxide whiskers are compounded and kneaded with the

abovementioned powder materials in an amount of 1 to 30% by weight of the total solid of the composition. As is the case of the abovementioned oily paint, the present whiskers may be pretreated to give hydrophobic properties thereto.

In either form of the anti-chipping coating compositions, the present compositions may further include various coating additives as pigment, wetting agent, levelling improving agent, dispersing aid, anti-sagging agent, solvent, ionic regulator and the like.

Though the present anti-chipping coating composition is specifically useful as an intermediate coating for automobile bodies, it may also be applied as a top coat or an under coat by selecting an appropriate resinous vehicle and coating additives as desired. Thus, in the first aspect of the invention, a novel pigment of tetrapod-like zinc oxide whisker is used as an anti-chipping pigment in a specified amount in a coating composition. Regarding the working effects of such whiskers, the inventors are now of the opinion that since the whiskers each has the specified shape, they must have an excellent shrinkage resistance in both horizontal and vertical directions in a coating as well as prominent elastic modulus, for which reasons an excellent anti-chipping effect is given to the coating and as a consequence thereof, rust generation must be effectively controlled.

In the second aspect of this invention, is provided a coating composition which is excellent in abrasion resistance and is useful as an outer surface coating of ship bodies where a direct contact with pier wall is often occurred and as an inner surface coating of tank, hopper and pipe lines for storing or transporting ore, cement, cereal or the like where sever mechanical and physcal abrasion forces are always exerted thereon, comprising a resinous vehicle capable of resulting a coating with Tg value of 90 °C or more, 10 to 70% by weight of the total solid of the composition of tetrapod-like zinc oxide whiskers, and microparticles of natural or artificial hard ceramics, having an average diameter of 0.1 to 200$\mu$m, selected from the group consisting of bauxite, silica sand, powder emery, alumina, zirconia, silica, magnesite and magnesia, the sum of the tetrapod-like zinc oxide whiskers and said hard ceramics microparticles being 30 to 80% by weight of the total solid of the composition.

According to the inventors' studies, it was found that though hard ceramics microparticles are most effective additives for the improvement in hardness of coating, but when said improvement resorts to the ceramics microparticles alone, there always occur undesired decrease in impact strength and that when a specified amount of the present tetrapod-like zinc oxide whiskers is caused with the hard ceramics microparticles, both hardness and impact strength are greatly improved. This might be due to the fact that the present zinc oxide whiskers, from their particular structural characteristics, can bring favorable effects on structural strength of coating in both vertical and horizontal directions, resulting further improvement in abrasion resistance, and at the same time, improving follow-up action to collision deformation, thereby resulting a marked increase in impact strength.

As a resinous vehicle, any of the resinous materials customarily used in a high abrasion resistant coating compositions may be satisfactorily used, providing resulting a coating with Tg value of 90 °C or more. They are of curing type, and therefore, are selected from a combination of at least two resins or a resin and a compound each having either one of mutually reactive, crosslinkable functional groups or at least one resin having in its molecule both of mutually reactive, crosslinkable functional groups. To obtain a highly anti-abrasive coating, the resin should preferably be selected from the members capable of resulting a comparatively hard coatings. For this reason, preferable resins are epoxy resin, unsaturated polyester resin, phenol resin and especially Resorcin type phenol resin, urea resin, polyamide resin, acid anhydride resin and the like, optionally compounded with polyamine, ketimine, polyisocyanate and the like.

Particularly preferable member is the combination of epoxy resin and polyamine compound.

The amount of tetrapod-like zinc oxide whiskers, in this aspect of this invention, should be in a range of 10 to 70% by weight of the total solid of the composition. This is because, if the amount is less than 10% by weight, the intended objects and effects cannot be fully attained, and if it exceeds over the upper limit of 70% by weight, various problems as lowering in application characteristics and especially spraying workability and loss in coating appearance are inevitably occurred.

In this aspect of the invention, microparticles of natural or artificial hard ceramics having an average diameter of 0.1 to 200$\mu$m are compounded together with the abovementioned whiskers. Examples of such ceramics microparticles are bauxite, silica sand, powder emery, alumina, zirconia, silica, magnesite and magnesia. However, the invention can never limited to those ceramics only and any other similar hard ceramics may also be used satisfactorily. In this aspect of the invention, it is, however, essential that the sum of said ceramics microparticles and said zinc oxide whiskers must be within a range of from 30 to 80% by weight of the total solid of the composition. This is because, if the total amount of said ceramics microparticles and said whiskers is less than 30% by weight, it is unable to get the desired effects, i.e. improvements in both impact strength and abrasion resistance, in full, and if it is over 80% by weight, there

is a tendency that the formed coating will become too brittle and application characteristics and especially spraying workability and coating appearance and especially smoothness are liable to be ruined. The present coating composition may further include fibrous fibers as, for example, glass fiber, potassium titanate fiber, rock wool, alumina fiber and the like, as desired. However, in a spraying application, such fibers should not preferably be added because of the fear of occurrence of granular structure. Solvent, pigment and other coating additives may be added as desired.

The present coating composition may be applied on a substrate by any conventional means as brushing, roll coating, and spray coating. However, in the coating on inner surface of tank and the like, particular preference is given to spraying system, including air spraying and airless spraying. The coating thus formed should have a Tg value of 90 ° C or more. The term "Tg value" as used herein shall mean dynamic Tg value (by expansion vibration, number of vibration 110HZ), which is the peak value of Tan$\delta$ measured by using Leovibron DDV-II (Orientec K.K.), at the time of increasing temperature at a rate of 1 ° C/minute, starting from room temperature. As already stated, the abovementioned coating composition of this invention is excellent in workability and capable or resulting a coating with excellent impact strength, abrasion resistance and appearance and therefore, is specifically useful as a top coat for outer surface of ship bodies and inner surface of hopper, tank, pipe line for storing or transporting powdery granular products.

In the third aspect of this invention, is provided a road marking coating composition added with 9 to 95% by weight of the total solid of the composition of the present tetrapod-like zinc oxide whiskers.

Usually, for road marking purpose, is used a coating composition comprising a durable resin vehicle as petroleum resin, $C_5$ resin, $C_9$ resin, polyester resin, phthalic resin, alkyd resin, maleic rosin resin, rosin modified alkyd resin and acrylic resin, added with such additives as color pigment, body pigment, plasticizer, anti-settling agent, bluing agent, detackifier, dispersing agent, solvent and the like. Glass bead may also be sometimes added as a light reflecting material. In this invention, previously mentioned tetrapod-like zinc oxide whiskers are added to any of the known road marking coating compositions in a specified amount. By the adoption of such whiskers, various properties of road marking coating compositions are greatly improved.

1. Since the abrasion resistance and impact strength of the formed coating are greatly increased, durability of road marking composition is greatly improved.

2. Since the tetrapod-like zinc oxide whiskers can strongly absorb ultraviolet rays and do have excellent chalking resistance (deterioration by acid is controlled by the reaction of said whiskers with an acidic oxidation product of binder material), weather resistance of the formed coating is greatly improved.

3. Since the tetrapod-like zinc oxide whiskers can form a bulky structure by the stack of a large number of cubic whiskers, the coating composition is particularly suitable in a thicker coating.

Thus, the present tetrapod-like zinc oxide whiskers are quite useful additive for road marking coating compositions, acting as white pigment, light reflecting agent, weather resistance improving agent, mechanical strength improving agent, thicker coating aid and the like.

The amount of such whiskers in a road marking coating composition may be varied in a wide range depending on the intended object and effect. There is, however, a preferable range, as a matter of course, from the effectual point of view. Too large quantity is not desired because of producing a brittle coating. Usually, the amount of the present whiskers is selected in a range of from 9 to 95% by weight, preferably 20 to 90% by weight, of the total solid of the composition. The present road marking coating composition may be applied on road surface by any conventional means.

However, under certain circumstances, a part of whiskers to be added in a road marking paint, e.g. about 5 to 15% by weight of the total whiskers, may be cut from such paint, and after applying the paint on road, the cut amount of whiskers may be directly spreaded on the coated road surface, thereby attaining far improved light-reflecting and abrasion resistance of the finished coating.

In the fourth aspect of the invention, is provided a thicker coating abrasive putty which is formulated into 2 packs, one containing a putty base comprising unsaturated polyester resin, filler and unsaturated vinyl monomer and the other containing a peroxide hardening agent, or 3 packs further including the third pack containing a hardening accelerator, at least part of said filler, corresponding to 1 to 30% by weight of the total solid of the composition, being the present tetrapod-like zinc oxide whiskers.

This invention was based on the inventors' novel finding that when the tetrapod-like zinc oxide whiskers are compounded as filler material with a putty composition in a specified amount, an appropriate viscosity is given to the putty and moreover, a troublesome question of clogging of abrasive papaer in grinding operation can be ingeniously solved out. The putty composition compounded with such whiskers is free from slendering in thickness of coating and can be used as an ideal thicker coating putty. Thus, the invention can be applied in various putties to be subjected to post grinding operation.

When the present tetrapod-like zinc oxide whiskers are added in place of or in addition to body pigment in an oily putty comprising as main ingredients oily varnish, body pigment and color pigment, which has the drawbacks of belated drying and thicker coating difficulties, drying and thicker coating properties are advantageously improved.

When the present whiskers are added to vinyl chloride putty comprising vinyl chloride resin, color pigment, body pigment, plasticizer, stabilizer and the like and being suffered from slendering problem, an improved vinyl chloride putty having no slendering problem can be obtained.

When the tetrapod-like zinc oxide whiskers of the invention are added as filler to urethane putty, polyester putty or alkyd resin putty, it is able to obtain the corresponding putty being free from slendering in thickness and having an improved abrasion resistance.

Among them, particularly important putty for the repairing of automobile bodies is a polyester putty. Therefore, this type of putty shall be more fully explained herein-under.

In the repairing of damaged automobile bodies, in order to flatten the uneven surface of processed sheet metal, a sheet metal putty is first applied, and after grinding with a sand paper, a poly-putty is applied, grinding with a fine sand paper is again carried out, and subsequently coating operations including primer surfacer coating are carried out. The polyester putties used in such an application are pasty or putty like compositions comprising as main ingredients, unsaturated polyester resin and unsaturated monomers, optionally added with pigment, stabilizer, diluent, solvent, thermoplastic resin and other additives, as desired. At the time of actual use, the putty composition is mixed with a hardening agent as peroxide and the like, and the mixture is applied by an appropriate means as spatula, on a substrate and cured at room temperatures. However, since the curing conditions are only judged by finger touch and touch feeling and degree of progress in curing reaction are not always equivalent to, there often produces an adhesion failure between iron face and putty at the time when the subsequent grinding operation is carried out with the coating under insufficiently cured or incurred conditions.

Furthermore, surface area and thin film portion of polyester putty are often contacted with oxygen in air, resulting incurred portions, which must be removed from the coating by grinding with sand paper or the like, otherwise generating the problems of adhesion failure and inferior water resistance of the coating. Therefore, for the purpose of detecting the degree of progress in curing reaction, attempts have been made to add various dyestuffs in hardening agent or putty base. As the most advanced technique, in Japanese Patent Publication (unexamined) No. 91572/87, is disclosed a two components (A and B) putty, in which

A component consists of

15 to 30 wt% of unsaturated polyester resin
40 to 60 wt% of filler
10 to 20 wt% of unsaturated vinyl monomer
1 to 2 wt% of hardening accelerator
and optional additives, and

B component consists of 2 to 3 wt% of peroxide hardener, characterizing by including in said A component, 0.001 to 5 wt% of the total solid of said A component of an anthraquinone dyestuff represented by the formula:

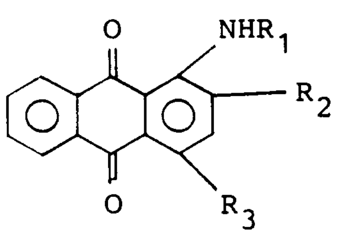

(I)

wherein $R_1$ is selected from the group consisting of hydrogen, lower alkyl, phenyl and alkylphenyl; $R_2$ is selected from the group consisting of hydrogen, alkoxy, aryloxy and amide; and $R_3$ is amino group, imino group or hydroxyl group,

or a mixture of said anthraquinone dyestuff (I) and an azo dyestuff (II) and/or azo dyestuff (III) represented by the formula:

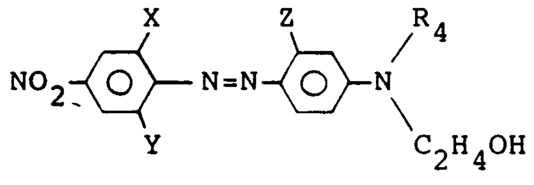

(II)

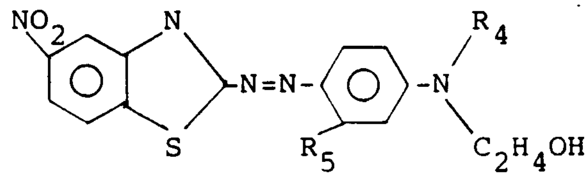

(III)

wherein X and Y each represents hydrogen, Cl or Br; Z is methyl or Cl; $R_4$ is selected from the group consisting of hydrogen, methyl, ethyl and hydroxyethyl; $R_5$ is hydrogen or methyl group.

Said putty, when mixed (A) with (B) and applied on a substrate, will be disclored with the progress in curing reaction and insufficiently cured or incurred portion at the putty surface by the attack of oxygen in air will be visually detected. Therefore, the object of the disclosed invention is to effect precise determination of holding time for curing reaction and optimum control of grinding operation by visual means in place of heretofore used intuitional determination means. Thus, the said invention does not concern an improvement in grinding properties of putties themselves.

Now, the inventors have found that when tetrapod-like zinc oxide whiskers are used as filler material in a putty composition, well balanced, two conflicting properties, i.e. anti-abrasive property and grinding property, are given to the putty due to the particular structure and properties of said whiskers, and moreover, thus obtained putty can be applied in a thicker coating without the fear of slendering problem.

In a particularly preferable embodiment of this invention, is provided a two packs putty composition, one pack containing a putty base comprising as main ingredients, unsaturated polyester resin (preferably 15 to 30% by weight), filler (preferably 40 to 60% by weight), unsaturated vinyl monomer (preferably 10 to 20 % by weight) and hardening accelerator (preferably 1 to 2% by weight) and the other pack comprising peroxide hardener (preferably 2 to 3% by weight), or a three packs putty composition, containing, in addition to the abovementioned two packs, the third pack containing additional accelerator, characterizing by substituting tetrapod-like zinc oxide whiskers for at least one part of said filler. Such putty is specifically useful as a repairing putty for automobile bodies.

The unsaturated polyester used in this invention has an acid component comprising unsaturated acid or a mixture of unsaturated acid and saturated acid, and a polyhydric alcohol component. Examples of unsaturated acids are maleic anhydride, maleic acid, fumaric acid, itaconic anhydride, itaconic acid and the like and the examples of saturated acids are phthalic anhydride, phthalic acid, terephthalic acid, isophthalic acid, het acid, adipic acid, tetrahydrophthalic anhydride and the like.

Examples of polyhydric alcohols to be reacted with the abovementioned acid are ethylene glycol, propylene glycol, diethyleneglycol,triethyleneglycol, dipropyleneglycol, bisphenoldioxypropylether, 1,3-butylene glycol, 2,3-butylene glycol, neopentyl glycol, trimethylolpropane, glycerol and the like.

As an air drying component, one may use polyhydric alcohol allyl ethers as, for example, pentaerythritol triallyl ether, trimethylolpropane diallyl ether, glycerine monoallyl ether, trimethylolethane diallyl ether, glycerine diallyl ether and the like. These are ethers having in their respective molecule at least one hydroxyl group. As the content of allyl groups, it is preferred to be 0.05 to 2 moles, most preferably 0.1 to 1.5 mole, as allyl group per mole of acid component.

Such unsaturated polyester resin is combined with polymerizable unsaturated monomers in the present putty.

Examples of said monomers are styrene, vinyl toluene, chlorostyrene, α-methyl styrene, divinylbenzene, acrylic ester, methacrylic ester, glycidyl methacrylate, vinyl acetate, diallyl phthalate, vinyl pyrrolidone, ethylene diacrylate, hydroxyethyl acrylate, TMP-triacrylate and other crosslinking monomers.

Examples of pigments are titanium white, cyanine blue, chrom yellow, watching red, iron oxide, carbon black, aniline black and the like.

In this invention, tetrapod-like zinc oxide whiskers are selectively used as filler material. However, if desired, other conventional fillers as calcium carbonate, clay, talc, mica, asbestos powder, finely pulverized silica, barium sulfate, zinc stearate, lithopone and the like may be additionally used.

For the purpose of weight-cut and better abrasive resistance, microbaloon is preferably compounded. Examples of microbaloons are silica baloon, perlite baloon, resin baloon and the like.

As the curing accelerator, cobalt octonate, cobalt naphthenate, manganese naphthenate and the like are preferably used. Besides the above, the following may be added as optional additives to said (A) component.

1. Stabilizer:
as hydroquinone, hydroquinone monomethyl ether, toluhydroqyinone, p-benzoquinone, 2,5-di-tert-butyl paraquinone, 2,5-di-tert-amyl hydroquinone, 2,5-di-tert-butyl hydrotoluquinone, mono-tert-butyl hydroquinone, 2,6-di-tertbutyl p-cresol, tert-butyl catechol and the like.

2. Diluent:
as ethyl acetate, toluene, xylene, methanol, ethanol, butanol, acetone, MIBK, MEK, Cellosolve, diacetone alcohol and the like.

3. Thermoplastic resin:
as cellulose acetate butyrate, nitrocellulose, vinyl acetate resin, vinyl chloride resin, acryl resin, butylated melamine, butylated urea and the like.

4. Other additives:
as phosphoric acid, tartaric acid, phosphorous acid, fatty acid, silicone oil, surfactant, paraffin wax and the like.

As the hardening agent to be used as B component, any of the known compounds capable of easily generating radicals by the action of heat or ultraviolet rays may be satisfactorily used. Examples are methyl ethyl ketone peroxide, cyclohexanone peroxide, benzoyl peroxide, dicumyl peroxide, tert-butyl perbenzoate and the like.

In the present putty composition, the hardening agent must be packed in a separate package. The main putty component (A) must have the following composition:

15 to 30% by weight of unsaturated polyester resin
40 to 60% by weight of filler
10 to 20% by weight of unsaturated vinyl monomer, and
1 to 2% by weight of curing accelerator.

When the component (A) and component (B) are mixed together, thus obtained putty will be completely cured within about 30 minutes.

By the adoption of tetrapod-like zinc oxide whisker filler, clogging of abrasive paper at the time of grinding operation can be almost completely controlled and thus obtained putty is free from slendering in thickness of applied coating, capable of resulting a thicker coating with excellent grinding property and abrasion resistance and excellent adhesion to intermediate and top coatings. An excellent ground surface can be obtained therewith.

In the fifth aspect of this invention, is provided a curing acceleration catalyst being useful in a thermosetting type resinous composition and comprising tetrapod-like zinc oxide whiskers carried with a catalyst selected from the group consisting of organic tin compound, peroxide, organic acid, organic amine, ammonium salt and metal chelate compound.

The inventors have found that the present tetrapod-like zinc oxide whiskers are excellent carrier for certain type of catalysts which are customarily used in paint or molding field and on the basis of this finding, the present invention has been made.

The first group of catalysts suitably carried with the present tetrapod-like zinc oxide whiskers are organic tin compounds customarily used as block-releasing agent for blocked isocyanates, one of the raw materials of urethane resin.

Examples of such organic tin compounds are dibutyl tin oxide, dibutyl tin dilaurate, dibutyl tin maleate, dimethyl tin oxide and the like.

The second group of catalysts are various peroxides used as radical generators in unsaturated polyester resin compositions and the like. Examples are benzoyl peroxide, lauroyl peroxide, acetyl peroxide, t-butyl hydroperoxide, cumen hydroperoxide, MEK peroxide, dicumyl peroxide and the like.

The third group of catalysts are driers to be used as decomposition accelerator, as, for example metal carboxylates, the metal being cobalt, manganese, barium, cerium, lead, zinc, calcium, titanium, zirconium, iron, copper, tin, molybdenium and the like, and tertiary amines as triethylamine, triethanolamine, 4,4-(tetramethylamino) diphenyl methane, 1-(2-hydroxyethyl)-tetrahydroquinoline and the like, quaternary ammonium salts and acids as p-toluenesulfonic acid, dinonyl naphthalene disulfonic acid and the like. Besides the above-said members, any of the known curing accelerators other than acids or bases which will form complexes with zinc oxide may be satisfactorily used in this invention.

In preparing the present curing acceleration catalyst, one of the abovementioned catalyst is first dissolved

or dispersed in water or an appropriate organic solvent, and to this, the abovementioned tetrapod-like zinc oxide whiskers are contacted and dried. To make the whiskers contact with the catalyst solution or dispersion, dipping, spraying and other conventional means may be satisfactorily used. The present curing acceleration catalyst thus obtained may be used as a substitute for all or a part of zinc oxide and curing accelerator in a coating composition or a molding material which is permissible to add with zinc oxide as a body pigment or white pigment and which is desired to add with the abovementioned curing catalyst.

By the adoption of the present curing acceleration catalyst, the curing accelerator can be uniformly distributed in said composition because of the excellent dispersion properties of the tetrapod-like zinc oxide whisker in such medium, and hence an excellent uniform hardening of said coating composition or molding composition can be obtained. Furthermore, since the zinc oxide whiskers can be used as a body pigment or white pigment as they are, none of the undesired effects derived from the presence of foreign material in the system as is the case with other carrier materials will be produced. The present tetrapod-like zinc oxide whiskers each has the specific structure and comparatively small bulk density, which are specifically benefical for the whiskers being used as the carrier for curing accelerators. Since the present whiskers are excellent in heat resistance and well stand against normal baking or molding temperature and curing temperature, they are likewise very useful as filler material in a coating composition or molding material.

The invention shall be now more fully explained in the following Examples. Unless otherwise being stated, all parts and % are by weight.

Examples of anti-chipping coating composition:

Example 1

Preparation of resinous fine particle (1):

| | |
|---|---|
| Finedic M 6107 (1) | 500 parts |
| Epicoat 1004 (2) | 500 |
| Rutile type titanium oxide | 100 |

(1) ... Polyester resin, Tm 110 °C, HO value 0, acid value 55, trademark of Dainippon Ink K.K.
(2) ... Epoxy resin, epoxy equivalent 950, trademark of Shell Chem. Co.

The abovementioned materials were fuse-mixed by using a heating mixer and after allowing to cool the formed mass was pulverized in a grinder at room temperature to obtain resinous fine particles (1) having a maximum diameter of 45μm.

Preparation of coating paste (1):

| | |
|---|---|
| aqueous varnish (3) | 300 parts |
| resinous fine particles (1) | 70 |
| selicite | 16 |
| tetrapod-like zinc oxide whisker | 16 |
| carbon black | 5 |
| zinc chromate | 32 |
| Rutile type titanium oxide | 70 |
| deionized water | 90 |
| Total | 599 parts |

(1) ... Polyester resin, Tm 110 °C, HO value 0, acid value 55, trademark of Dainippon Ink K.K.
(3) ... aqueous resin, maleic anhydride modified 1,4-polybutadiene resin, neutralized with dimethyl ethanol amine acid value 90, neutralization rate 80%, solid 30% by weight, molecular weight 1,300.

The abovementioned materials were placed in a 1l stainless steel vessel and the content was mixed and dispersed well by means of paint conditioner, at room temperature for 30 minutes, to obtain a gray colored coating paste (1).

Preparation of coating composition (1)

Into a 1l stainless steel vessel, were placed 400 parts of the coating paste (1) and 25 parts of hexamethoxymethylol melamine resin (Cymel 303, trademark of Mitsui Cyanamide K.K., solid content 98% by weight), and the content was mixed and dispersed well in a laboratory mixer at room temperature for 15 minutes to obtain a gray colored coating composition (1).

Comparative Example 1

A similar gray colored coating composition was prepared as in Example 1, but substituting a common zinc oxide powder (Reagent 1st grade) for tetrapod-like zinc oxide whiskers.

Example 2

Using 60 parts of oil-free polyester resin (Mn 1700, acid value 10, OH value 60, NV 60%), 40 parts of butylated melamine resin G 821-60 (manufactured by Dainippon Ink, NV 60%), 30 parts of Titanium R-820 (manufactured by Ishihara Sangyo), 12.5 parts of tetrapod-like zinc oxide whiskers previously surface-treated with KBM 403 (silane coupling agent, manufactured by Shinetsu Silicone K.K.), 2.0 parts of carbon black and 15.5 parts of xylene, a coating composition (2) was prepared in a usual way.

Example 3

The same experiment as stated in Example 2 was repeated excepting using untreated, tetrapod-like zinc oxide whiskers. Each coating composition prepared in the abovementioned Examples and Comparative Example, was diluted with a coating thinner to a Ford Cup #4 viscosity (20 °C) of 25 seconds and thus obtained diluted composition was applied by spraying means onto a steel plate previously coated with an electrodeposition coating, Power top U-1000-gray (manufactured by Nippon Paint Co., Ltd.), so as to be a dry film thickness of 30~40μm, and then baked at 150 °C for 30 minutes. Thereafter, Orga G 25 white (melamine alkyd based top coat composition, trademark of Nippon Paint Co., Ltd.) was applied to give a coating of dry film thickness of 35~45μm, and baked at 140 °C for 30 minutes.

Table 1

| | Ex.1 | Comp. Ex.1 | Ex.2 | Ex.3 |
|---|---|---|---|---|
| number of scratches | 4 | 18 | 5 | 8 |
| number of rusts | 28 | 45 | 25 | 30 |

The test method and evaluation means used are as follows:

Test method;

50g of JIS No. 7 crushed stones and brought collision with the test plate at a right angle at -20 °C by using 4Kg/$cm^2$ of air pressure.

Evaluation;

Chipping resistance effect was evaluated by the following two items.

| | |
|---|---|
| Number of scratches | number of scratches each having a damaged diameter of 1mm or more were visually measured and counted in 5x7cm area |
| Rust number | test plate was sprayed with an aqueous saline water and after elapsing 24 hours, number of rusts was visually counted. |

The test results are shown below.

Examples of abrasion resistant coating composition:

Example 4

To 220 parts of Intergard paint (room temperature curing type liquid epoxy/polyamine anti-abrasive paint for ship coating use, trademark of Nippon Paint Co., Ltd.), which includes 72 parts of bauxite powder, were added 26 parts of tetrapod-like zinc oxide whiskers previously surface-treated with silane coupling agent KBM-403 (manufactured by Shinetsu Kagaku K.K.) and the mixture was dispersed well in SG mill for 1 hour to obtain a coating composition (1).
The abovementioned whiskers (supplied by Matsushita Elect. Co.) were composed of highly pure zinc oxide crystals each comprising a center nuclear portion from which 4 crystalline needles are extending outwardly in each different direction, diameter of said needle measured at the foot portion being 0.8 m and its length being 3.5µm.
35.5 parts of EG hardener (polyamine hardener for Intergard paint, manufactured by Nippon Paint Co., Ltd.) were added with the abovementioned coating composition and the mixture was applied on 70mmx130mmx3t sandblasted steel plate by spraying means so as to give a dry film thickness of 120µm, dried at 60 °C for 3 days and then allowed to leave at room temperature for 1 day.
The coating thus obtained was subjected to the following tests.

Abrasive weight-loss test:

Taber abrasion test (JIS-K5665) was carried out (1kg load, 1,000 times rotation)

Impact strength lest:

Gardner impact test was carried out, under conditions given in Table 2, and diameter of inflated damage was measured.
Pencil hardeness test was also carried out.
The test results are shown in Table 2.

Comparative Example 2

The similar experiment was carried out as in Example 4, but in this experiment, 20 parts of bauxite powder were used in place of tetrapod-like zinc oxide whiskers.

The test results are also shown in Table 2.

Table 2

| | Ex.4 | Comp.Ex.2 |
|---|---|---|
| Abrasion weight loss(mg) | 21mg | 33mg |
| Impact test | | |
| 1kg-1m<br>1kg-0.5m | 10mm<br>8mm | 15mm<br>13mm |
| Pencil hardeness | 3H | H |
| Tg | 113 ° C | 82 ° C |

Examples of road marking coating compositions:

Example 5

Onto an asphalt-made test block, the following solvent welding type under coating compositions:

Under coating composition;

| | |
|---|---|
| Petroleum resin<br>toluene<br>ethyl acetate | 10.0 parts<br>45.0<br>45.0 |

Then, the following solvent welding type road marking white paint was applied on by using a flow coater and dried at room temperature for 3 minutes or more.
The coating was then evaluated by the following tests.

Durability;

Impact test with a rubber hammer was carried out and durability was evaluated by the degree of failure of coating

Weather resistance;

Weather-0-meter and ultra-violet ray irradiation were used

Thicker coating workability;

Application easiness was judged by an actual thicker coating.

Visual cognition at dark time

This was judged by a driver at the actual driving at night. The test results are shown in Table 3.

Examples 6~10

The similar experiments as stated in Example 5 were repeated, excepting substituting the followings for the solvent welding type coating composition of Example 5.

[Example 6]

| | |
|---|---|
| Petroleum resin | 20.0 parts |
| soy bean oil | 5.0 |
| titanium white | 10.0 |
| tetrapod-like zinc oxide whiskers | 55.0 |
| glass bead | 10.0 |

[Example 7]

| | |
|---|---|
| Petroleum resin | 25.0 parts |
| soy bean oil | 5.0 |
| titanium white | 10.0 |
| calcium carbonate | 40.0 |
| tetrapod-like zinc oxide whiskers | 20.0 |

[Example 8]

| | |
|---|---|
| Petroleum resin | 25.0 parts |
| soy bean oil | 5.0 |
| titanium white | 10.0 |
| calcium carbonate | 12.0 |
| tetrapod-like zinc oxide whiskers | 28.0 |
| glass bead | 20.0 |

[Example 9]

| | |
|---|---|
| Petroleum resin | 20.0 parts |
| soy bean oil | 5.0 |
| tetrapod-like zinc oxide whiskers | 75.0 |

In this Example, the zinc oxide whiskers are used in both senses of filler and pigment.

[Example 10]

| | |
|---|---|
| Petroleum resin | 25.0 parts |
| soy bean oil | 5.0 |
| tetrapod-like zinc oxide whiskers | 38.0 |
| calcium carbonate | 12.0 |
| glass bead | 20.0 |

Comparative Example 3

The same experiment as stated in Example 9 was repeated, excepting substituting the whiskers having the dimensions shown in the following Table 3 for the whiskers of Example 9.

Comparative Example 4

The same experiment as stated in Example 9 was repeated, excepting substituting zinc white (France No.1) for the tetrapod-like zinc oxide whiskers of Example 9.

Comparative Example 5

The same experiment as stated in Example 5 was repeated, excepting substituting the following conventional road marking paint for the paint of Example 5.

| | |
|---|---|
| Petroleum resin | 20.0 parts |
| soy bean oil | 5.0 |
| titanium white | 10.0 |
| calcium carbonate | 45.0 |
| glass bead | 20.0 |

Example 11

Onto an asphalt-made test block, the following paint type (room temperature curing type) road marker white was applied by using a roller, and allowed to drying at room temperature for more than 3 minutes. The coating was evaluated as in Example 5 and test results obtained were shown in Table 3.

| | |
|---|---|
| Titanium white | 10.34 parts |
| tetrapod-like zinc oxide whiskers | 60.03 |
| dispersing acid (Disparone 4200-20) | 0.69 |
| soy bean oil phthalic resin varnish | 24.81 |
| drier (lead naphthenate) | 0.07 |
| ethyl acetate | 4.06 |

Comparative Example 6

The similar experiment as stated in Example 11 was repeated, excepting substituting the following conventional road marker white for the road marker white of Example 11.

| | |
|---|---|
| Titanium white | 15.00 parts |
| calcium carbonate | 42.00 |
| dispersing acid (Disparone 4200-20) | 1.00 |
| soy bean oil phthalic resin varnish | 36.00 |
| drier (lead naphthenate) | 0.10 |
| ethyl acetate | 5.90 |

Example 12

The similar experiment as stated in Example 11 was repeated, excepting using the following acrylic road marker yellow.

| | |
|---|---|
| Titanium white | 0.75 part |
| chrome yellow | 8.32 |
| tetrapod-like zinc oxide whiskers | 47.06 |
| silica brick powder | 10.00 |
| aluminium stearate | 0.76 |
| acrylic resin | 25.71 |
| dibutyl phthalate | 3.03 |
| toluene | 4.54 |
| methyl alcohol | 2.27 |

Comparative Example 7

The similar experiment as stated in Example 11 was repeated, excepting substituting the following conventional acrylic road marker yellow for the marker of Example 11.

| | |
|---|---|
| Titanium white | 1.00 part |
| chrome yellow | 11.00 |
| calcium carbonate | 30.00 |
| silica brick powder | 10.00 |
| aluminium stearate | 1.00 |
| acrylic resin | 34.00 |
| dibutyl phthalate | 4.00 |
| toluene | 6.00 |
| methyl alcohol | 3.00 |

Example 13

The same experiment as stated in Example 11 was repeated, excepting using the following road marker blue. The coating was evaluated as in Example 11 and the test results were shown in Table 3.

| | |
|---|---|
| Titanium white | 15.05 part |
| Cyanine blue | 0.56 |
| tetrapod-like zinc oxide whiskers | 11.51 |
| soy bean oil phthalic resin varnish | 37.62 |
| Dispersing acid (Disparone 4200-20) | 1.41 |
| silica brick powder | 28.21 |
| toluene | 5.64 |

Comparative Example 8

The similar experiment as stated in Example 11 was repeated, excepting substituting the following conventional road marker blue for the marker of Example 11. The test results are shown in Table 3.

| | |
|---|---|
| Titanium white | 16.00 part |
| Cyanine blue | 0.60 |
| calcium carbonate | 5.90 |
| soy bean oil phthalic resin varnish | 40.00 |
| Dispersing acid (Disparone 4200-20) | 1.50 |
| silica brick powder | 30.00 |
| toluene | 6.00 |

Table 3

| | | Zinc oxide | | coating thickness | dura-bility | weather resist-ance | visual cognition at dark time | thicker coat-ability |
|---|---|---|---|---|---|---|---|---|
| | | | size | | | | | |
| Example | 5 | zinc oxide whiskers | length 50～200 μm<br>foot diameter 3～14 μmφ | 2mm | ◎ | ◎ | ○ | ◎ |
| Example | 6 | zinc oxide whiskers | length 50～150 μm<br>foot diameter 3～12 μmφ | 2mm | ◎ | ◎ | ◎ | ◎ |
| Example | 7 | zinc oxide whiskers | length 10～200 μm<br>foot diameter 5～14 μmφ | 2mm | ◎ | ○ | ○ | ○ |
| Example | 8 | zinc oxide whiskers | length 30～100 μm<br>foot diameter 1～10 μmφ | 2mm | ◎ | ○ | ◎ | ◎ |
| Example | 9 | zinc oxide whiskers | length 3～10 μm<br>foot diameter 0.7～5 μmφ | 2mm | ◎ | ◎ | ○ | ○ |
| Example | 10 | zinc oxide whiskers | length 3～10 μm<br>foot diameter 0.7～5 μmφ | 2mm | ○ | ○ | ○ | ○ |
| Comp. Ex. | 3 | zinc oxide whiskers | length 0.1～1 μm<br>foot diameter 0.01～0.1 μmφ | 2mm | × | ◎ | × | × |
| Comp. Ex. | 4 | zinc white | average 0.52 μm | 2mm | × | ○ | × | × |
| Comp. Ex. | 5 | — | — | 2mm | △ | | △ | ○ |

Table 3 (continued)

| | Zinc oxide | | coating thickness | dura-bility | weather resist-ance | visual cognition at dark time | thicker coat-ability |
|---|---|---|---|---|---|---|---|
| | | size | | | | | |
| Ex.11 | zinc oxide whisker | length 10 ~ 50 $\mu m$<br>foot diameter 1 ~ 4 $\mu m\phi$ | 2mm | ◎ | ◎ | ○ | ◎ |
| Comp. Ex. 6 | ―― | ―――― | 2mm | △ | × | △ | ○ |
| Ex.12 | zinc oxide whisker | length 30 ~ 100 $\mu m$<br>foot diameter 1 ~ 10 $\mu m\phi$ | 2mm | ◎ | ○ | ○ | ◎ |
| Comp. Ex. 7 | ―― | ―――― | 2mm | △ | × | × | ○ |
| Ex.13 | zinc oxide whisker | length 50 ~ 200 $\mu m$<br>foot diameter 3 ~ 14 $\mu m\phi$ | 2mm | ○ | ○ | ○ | ○ |
| Comp. Ex. 8 | ―― | ―――― | 2mm | △ | × | △ | ○ |

In Table 3, the test results were evaluated by the following criteria;

Durability: Taber Tester 500g load, 300 times rotation (JIS-K 5665)

- ◎ less than 20mg abrasion loss
- ○ 20~50mg
- △ 50~80mg
- X more than 80mg

Weather resistance:

- ◎ no cracks on coated road after 12 months
- ○ small cracks on coated road after 12 months
- X large cracks on coated road after 12 months

Visual cognition at dark time: object at 10m ahead

- ◎ clearly detectable
- ○ detectable
- △ dimly detectable
- X undetected

Examples of abrasive putty composition:

Example 14

| | |
|---|---|
| Unsaturated polyester varnish Polyset 1714 (trademark of Hidachi Kasei) | 35 parts |
| talc | 50 parts |
| tetrapod-like zinc oxide whiskers | 5 parts |
| dimethylaniline | 2 parts |
| styrene monomer | 7 parts |

To the abovementioned putty composition, were added 2 parts of 50% benzoyl peroxide paste and mixed well. Thus obtained putty was applied on 0.8mm polished steel plate and after elapsing 60 minutes, the coating was subjected to wet sanding with a #180 sand paper. At that time, clogging of abrasive paper and spatule workability were evaluated.
The test results are shown in Table 4.

Comparative Example 9

The similar experiment as stated in Example 14 was repeated, excepting substituting commercialized zinc white for the tetrapod-like zinc oxide whiskers.

Comparative Example 10

The sauce experiment as stated in Example 14 was repeated, excepting using 0.5 part of tetrapod-like zinc oxide whiskers.

Table 4

| | Ex. | Comp. Ex. | |
|---|---|---|---|
| | 14 | 9 | 10 |
| thicker coatability | O | X | X |
| grinding property (clogging) | no | yes | no |
| O ... no sagging<br>X ... sagging | | | |

Examples of curing acceleration catalyst:

Example 15

20 parts of 25% lead naphthenate were dissolved in 200 parts of toluene and to this, 20 parts of tetrapod-like zinc oxide whiskers were added and the mixture was stirred for 15 minutes. After elapsing further 10 minutes, toluene was removed off under reduced pressure to obtain the present catalyst. 210 parts of Cyanamide helgon under coat paint (oxidative polymerization type, oily anti-rusting paint, manufactured by Nippon Paint Co., Ltd.) were added with 20.5 parts of the abovementioned catalyst.

Comparative Example 11

To 210 parts of the same anti-rusting paint as used in Example 15, 2.0 parts of lead naphthenate were added as catalyst.
Each coating composition obtained in Example 15 and Comparative Example 11 was applied on both 150mmx70mmx0.8mm satin finish steel plate and glass plate so as to give a dry film thickness of 100μ. The coating conditions were evaluated after standing at 20°C for 4 hours and 64 hours.

Test methods used and evaluation standard:

Surface drying;

The coating was pressed by finger and finger mark on the coating and paint adhesion to finger were measured.
- O no finger mark and no paint adhesion
- △ finger mark but no paint adhesion
- X finger mark and paint adhesion

Curing property; finger was pressed on coating on glass plate and crosswisely moved according to JIS-K-5400.
- O no coating sliding
- △ slightly side but no coating break out
- X slide and break

Table 5

| | Example 15 | | Comp. Ex. 11 | |
|---|---|---|---|---|
| | Surface drying | Curing | Surface drying | Curing |
| after 4 hours | △ | △ | △ | X |
| after 64 hours | O | O | O | △ |

## Claims

1. A coating composition comprising a resinous vehicle and coating additives, which is characterized in that the resinous vehicle is selected from the group consisting of a combination of at least two resins each having either one of mutually active, crosslinkable functional groups, a combination of a resin and a compound each having either one of mutually reactive, crosslinkable functional groups, and at least one resin having in its molecule both of mutually reactive, crosslinkable functinal groups, and the coating composition contains tetrapod-like zinc oxide whiskers each comprising a central nuclear portion from which 4 crystalline needles are outwardly extended each in a different direction, the average diameter of said needle measured at the foot portion thereof being 0.7 to 14 $\mu m$ and the average length of said needle being 3 to 200 $\mu m$, the amount of said whiskers being at least 1% by weight of the total solid of the composition.

2. The composition according to claim 1 wherein the coating additives include colored pigments and body pigment, and the amount of said whiskers is 1 to 30% by weight of the total solid of the composition, which can result a coating with excellent chipping resistance.

3. A composition according to claim 2 which is formulated in either one of a water borne paint, a solvent type paint or a powder paint.

4. A composition comprising a resinous vehicle and coating additives, characterized in that the resinous vehicle is selected from the group consisting of a combination of at least two resins or a resin and a compound each having either one of mutually active, crosslinkable functional groups, and at least one resin having in its molecule both of mutually reactive, crosslinkable functional groups, providing resulting a coating with Tg value of 90°C or more, said coating additives include microparticles of natural or artificial hard ceramics, having an average diameter of 0.1 to 200 $\mu m$, selected from the group consisting of bauxite, silica sand, powder emery, alumina, zirconia, silica, magnesite and magnesia, and the composition contains tetrapod-like zinc oxide whiskers as defined in claim 1, the amount of said whiskers being 10 to 70% by weight of the total solid of the composition, the sum of said whiskers and said microparticles being 30 to 80% by weight of the total solid of the composition, which can give a coating with excellent abrasion resistance.

5. A composition comprising a resinous vehicle and coating additives, characterized in that the resinous vehicle is a durable resin selected from the group consisting of petroleum resin, $C_5$ resin, $C_9$ resin, polyester resin, phthalic resin, alkyd resin, maleic rosin resin, rosin modified alkyd resin and acrylic resin, the coating additives are any combinations of colored pigment, body pigment, plasticizer, anti-settling agent, bluing agent, detackifier, dispersing agent, solvent and glass bead, and the composition contains tetrapod-like zinc oxide whiskers as defined in claim 1, the amount of whiskers being 9 to 95% by weight of the total solid of the composition, which is specifically useful as a road marker.

6. A composition comprising a resinous vehicle and coating additives, characterized in that the resinous vehicle is a combination of unsaturated polyester resin and unsaturated vinyl monomer, the coating additives include hardening accelerator and peroxide hardener, and the composition contains tetrapod-like zinc oxide whiskers as defined in claim 1, the amount of said whiskers being 1 to 30% by weight of the total solid of the composition, which is specifically useful as an abrasive putty.

7. A composition of any one of claims 1 to 6 wherein the whiskers are previously treated with a coupler so as to give hydrophobic property thereto.

8. A curing acceleration catalyst composition, characterized in that the composition is obtained by contacting tetrapod-like zinc oxide whiskers as defined in claim 1, with a solution or dispersion of curing acceleration agent selected from the group consisting of organotin compound, peroxide, organic acid, organic amine, ammonium salt and metal chelate, and drying the thus treated whiskers.

## Patentansprüche

1. Überzugszusammensetzung, enthaltend einen harzartigen Träger und Überzugszusatzstoffe, dadurch gekennzeichnet, daß der harzartige Träger aus der Gruppe gewählt ist, bestehend aus einer Kombination aus mindestens zwei Harzen mit je einer von gegenseitig aktiven, vernetzbaren funktionellen Gruppen, einer Kombination eines Harzes und einer Verbindung mit je einer von gegenseitig reaktiven, vernetzbaren funktionellen Gruppen und mindestens einem Harz mit in seinem Molekül beiden der gegenseitig reaktiven, vernetzbaren funktionellen Gruppen, wobei die Überzugszusammensetzung tetraederförmige Zinkoxid-Whisker enthält, die je einen zentralen Nukleарteil aufweisen, aus dem vier kristalline Nadeln sich je in einer verschiedenen Richtung nach außen erstrecken, wobei der durchschnittliche Durchmesser der Nadel, gemessen an ihrem unteren Teil, 0,7 bis 14 µm und die durchschnittliche Länge der Nadel 3 bis 200 µm ist und wobei die Menge der Whisker mindestens 1 Gew.% des gesamten Feststoffes der Zusammensetzung beträgt.

**2.** Zusammensetzung nach Anspruch 1, wobei die Überzugszusatzstoffe Buntpigmente und Basispigment enthalten und die Menge der Whisker 1 bis 30 Gew.% des gesamten Feststoffes der Zusammensetzung beträgt, was in einen Überzug mit ausgezeichneter Abblätterfestigkeit resultieren kann.

**3.** Zusammensetzung nach Anspruch 2, die in Form einer Farbe auf Wasserbasis, einer Farbe vom Lösemitteltyp oder einer Pulverfarbe vorliegt.

**4.** Zusammensetzung, enthaltend einen harzartigen Träger und Überzugszusatzstoffe, dadurch gekennzeichnet, daß der harzartige Träger aus der Gruppe gewählt ist, bestehend aus einer Kombination aus mindestens zwei Harzen oder einem Harz und einer Verbindung mit je einer von gegenseitig aktiven, vernetzbaren funktionellen Gruppen und mindestens einem Harz mit in seinem Molekül beiden der gegenseitig reaktiven, vernetzbaren funktionellen Gruppen, was in einen Überzug mit einem Tg-Wert von 90 °C oder mehr resultiert, wobei die Überzugszusatzstoffe Mikroteilchen aus natürlicher oder künstlicher Hartkeramik enthalten, die einen durchschnittlichen Durchmesser von 0,1 bis 200 µm aufweisen und die aus der Gruppe gewählt sind, bestehend aus Bauxit, Quarzsand, Puderschmirgel, Aluminiumoxid, Zirkonoxid, Siliziumoxid, Magnesit und Magnesium, wobei die Zusammensetzung tetraederförmige Zinkoxid-Whisker nach der Definition im Anspruch 1 enthält, wobei die Menge der Whisker mindestens 10 bis 70 Gew.% des gesamten Feststoffes der Zusammensetzung beträgt und die Summe der Whisker und der Mikroteilchen 30 bis 80 Gew.% des gesamten Feststoffes der Zusammensetzung ist, was einen Überzug mit ausgezeichneter Abriebfestigkeit ergeben kann.

**5.** Zusammensetzung, enthaltend einen harzartigen Träger und Überzugszusatzstoffe, dadurch gekennzeichnet, daß der harzartige Träger ein beständiges Harz ist, das aus der Gruppe gewählt ist, bestehend aus Petroleumharz, $C_5$-Harz, $C_9$-Harz, Polyesterharz, Phthalharz, Alkydharz, Maleinkolophoniumharz, kolophonium-modifiziertem Alkydharz und Acrylharz, wobei die Überzugszusatzstoffe beliebige Kombinationen aus Buntpigment, Basispigment, Weichmacher, Absetzverhinderungsmittel, Bläumittel, Entklebungsmittel, Dispersionsmittel, Lösungsmittel und Glasperlen sind, wobei die Zusammensetzung tetraederförmige Zinkoxid-Whisker nach der Definition im Anspruch 1 enthält, wobei die Menge der Whisker 9 bis 95 Gew.% des gesamten Feststoffes der Zusammensetzung beträgt, was spezifisch als Straßenmarkierung brauchbar ist.

**6.** Zusammensetzung, enthaltend einen harzartigen Träger und Überzugszusatzstoffe, dadurch gekennzeichnet, daß der harzartige Träger eine Kombination aus ungesättigtem Polyesterharz und ungesättigtem Vinylmonomer ist, wobei die Überzugszusatzstoffe Härtungsbeschleuniger und Peroxidhärter enthalten und die Zusammensetzung tetraederförmige Zinkoxid-Whisker nach der Definition im Anspruch 1 enthält, wobei die Menge der Whisker 1 bis 30 Gew.% des gesamten Feststoffes der Zusammensetzung beträgt, was spezifisch als Schleifkitt brauchbar ist.

**7.** Zusammensetzung nach einem der Ansprüche 1 bis 6, wobei die Whisker mit einem Kuppler vorbehandelt sind, um ihnen hydrophobische Eigenschaften zu verleihen.

**8.** Härtungsbeschleunigungskatalysatorzusammensetzung, dadurch gekennzeichnet, daß die Zusammensetzung dadurch erhalten wird, daß tetraederförmige Zinkoxid-Whisker nach der Definition im Anspruch 1 mit einer Lösung oder Dispersion eines Härtungsbeschleunigungsmittels, das aus der Gruppe, bestehend aus Organozinnverbindung, Peroxid, organischer Säure, organischem Amin, Ammoniumsalz und Metallchelat, gewählt ist, in Kontakt gebracht wird und die so behandelten Whisker getrocknet werden.

## Revendications

1. Une couche de recouvrement, comprenant une base résineuse et des additifs couvrants, caractérisée par le fait que la base résineuse est sélectionée dans le groupe consistant en la combinaison d'au moins deux résines, chacune possédant l'un des groupes fonctionnels mutuellement réactifs et polymérisables, une combinaison d'une résine et d'un composé, chacun possédant l'un des groupes fonctionnels mutuellement réactifs et polymérisables, et d'au moins une résine ayant en sa formule moléculaire les deux groupes fonctionnels mutuellement réactifs et polymérisables, et la composition du produit couvrant contenant des micro-fibres d'oxyde de zinc en forme de tétrapodes, chacune comportant un noyau central dont partent quatre aiguilles cristallines, chacune dans une direction différente, le diamètre moyen de chaque aiguille, mesurée à son pied, étant de 0,7 à 1,4 $\mu$m, et la longueur de cette aiguille étant comprise entre 3 et 200 $\mu$m, la proportion de ces micro-fibres étant d'au moins 1 % en poids des matières solides du composé total.

2. Le composé, selon la revendication 1, dans laquelle les additifs couvrants comportent des pigments colorés et des pigments de base, la proportion des micro-fibres étant comprise entre 1 et 30 % en poids des matières solides incluses dans le composé, ce qui peut donner une couche couvrante avec une excellente résistance à l'écaillage.

3. Un composé, selon la revendication 2, qui soit formulé soit en une peinture à l'eau, en une peinture à base de solvant, ou une peinture en poudre.

4. Un composé comportant une base résineuse et des additifs couvrants, caractérisé par le fait que la base résineuse est sélectionnée dans le groupe comportant une combinaison d'au moins deux résines ou d'une résine et d'un composé, chacun ayant l'un des groupes fonctionnels mutuellement réactifs et polymérisables, et l'une au moins des résines ayant dans sa formule moléculaire les deux groupes fonctionnels mutuellement réactifs et polymérisables, fournissant ainsi un produit couvrant ayant une valeur de Tg de 90 C ou davantage, lesdits additifs comportant des micro-particules céramiques dures naturelles ou artificielles, ayant un diamètre moyen compris entre 0,1 et 200 $\mu$m, choisies dans le groupe comportant la bauxite, le sable siliceux, la poudre d'émeri, l'alumine, le zircon, la silice, la magnésite et la magnésie, et le composé contenant des micro-fibres d'oxyde de zinc en forme de tétrapode, comme définis sous la revendication 1, la proportion de ces micro-fibres étant de 10 à 70 % en poids du total des matières solides comprises dans le composé, le total desdites micro-fibres et desdites micro-particules étant de 30 à 80 % en poids des matières solides comprises dans le composé, ce qui peut donner un produit couvrant avec une excellente résistance à l'abrasion.

5. Un composé comportant une base résineuse et des additifs couvrants, caractérisé par le fait que la base résineuse est une résine stable choisie dans le groupe formé par les résines de pétrole, les résines en C5, les résines en C9, les résines de polyester, les résines phtaliques, les résines alkydes, les résines à base de rosine maléique, les résines alkydes modifiées en rosine et les résines acryliques, les additifs couvrants étant toute combinaison de pigments colorés, de pigments de base, de plastifiants, d'agents anti-dépôt, d'agents bleuissants, d'anti-collants, d'agents dispersifs, de solvants, et de billes de verre, et le composé contenant des micro-fibres d'oxyde de zinc telles que décrites dans la revendication 1, la quantité de ces micro-fibres étant de 9 à 95 % en poids des matières solides comprises dans le composé, ce qui est spécialement utile en emploi de marquage de routes.

6. Un composé, comportant une base résineuse et des additifs couvrants, caractérisé par le fait que la base résineuse est une combinaison de résines de polyester non saturées et de monomère de vinyle non saturé, l'additif couvrant comprenant un accélérateur de durcissement et un durcisseur au peroxyde, et le composé contenant des micro-fibres d'oxyde de zinc en forme de tétrapode, telles que définies dans la revendication 1, la quantité de ces micro-fibres étant comprise entre 1 et 10 % en poids des matières solides du composé total, ce qui est spécifiquement utile en emploi comme mastic abrasif.

7. Un composé, selon l'une des revendications 1 à 6, dans lequel les micro-fibres sont préalablement traitées avec un réactif tel qu'elles acquièrent des propriétés hydrophobes.

**8.** Un composé d'accélération catalytique de la polymérisation, caractérisé par le fait que le composé est obtenu par la mise en contact de micro-fibres d'oxyde de zinc en forme de tétrapodes, telles que définies dans la revendication 1, avec une solution ou une suspension d'un agent accélérateur choisi dans le groupe comprenant les composés organostanniques, les peroxydes, les acides organiques, les amines organiques, les sels d'ammoniaque et les chélates métalliques, et le séchage des micro-fibres ainsi traitées.